# EUROPÄISCHE PATENTSCHRIFT

(11) **EP 2 291 617 B1**
(45) Veröffentlichungstag und Bekanntmachung des Hinweises auf die Patenterteilung: **23.11.2016**
(21) Anmeldenummer: 09765446.1
(22) Anmeldetag: 17.06.2009
(51) Int. Cl.: G01D 5/20, G01D 3/02

(54) **ÜBERWACHUNGSSYSTEM FÜR EIN SCHWINGUNGEN UNTERWORFENES AGGREGAT**
MONITORING SYSTEM FOR AN ASSEMBLY THAT IS SUBJECT TO VIBRATIONS
SYSTÈME DE SURVEILLANCE D'UN ORGANE SOUMIS À DES VIBRATIONS

(30) Priorität: 20.06.2008 DE 102008029087
(43) Veröffentlichungstag der Anmeldung: 09.03.2011
(73) Patentinhaber: Schaeffler Technologies AG & Co. KG, 91074 Herzogenaurach (DE)
(72) Erfinder: KÜHL, Andreas, 52134 Herzogenaurach (DE); LANGER, Götz, 52159 Roetgen (DE)
(86) Internationale Anmeldenummer: PCT/DE2009/000833
(87) Internationale Veröffentlichungsnummer: WO 2009/152810

(56) Entgegenhaltungen:
- WO-A-2005/012840
- US-A- 4 429 578

## Beschreibung

### Gebiet der Erfindung

Die Erfindung liegt auf dem Gebiet des Maschinenbaus, spezieller auf dem Gebiet der Überwachungs- und Kontrolleinrichtungen für Aggregate und Maschinen.

Durch die Weiterentwicklung in der Technik werden nicht nur Aggregate und Maschinen leistungsfähiger, kostengünstiger und verlässlicher, sondern es steigen auch die Anforderungen an die Überwachbarkeit von Aggregaten mit den Leistungsanforderungen.

Dies gilt besonders auch für mechanisch oder elektrisch belastete Maschinen, insbesondere solche, die Schwingungen unterworfen sind, wie beispielsweise Motoren, Generatoren und Getriebe.

Besonders beim Betrieb rotierender Maschinen ist das Auftreten von Schwingungen kaum zu vermeiden. Andererseits kann durch die Erfassung auftretender Schwingungen eine Vielzahl von Analysen durchgeführt werden, beispielsweise von Unwuchten oder von Lagerzuständen.

Frequenzmessungen können daher sowohl für Aussagen zum Zustand der Lager als auch zur Prognose von in der Zukunft notwendigen Wartungs- und Erneuerungsarbeiten herangezogen werden.

Um derartige Maschinen zu überwachen, sind Überwachungseinrichtungen zur Schwingungsanalyse bekannt, die entsprechende kombinierte akustische oder mechanische Analogsignale von Maschinen aufnehmen und eine Frequenzanalyse im Sinne einer Fourrier-Transformation oder Fast Fourrier-Transformation durchführen, um festzustellen, wie stark einzelne Frequenzen oder Frequenzbereiche im Spektrum vertreten sind. Die Auswertung der Signalstärken einzelner Frequenzbereiche erlaubt insbesondere durch Vergleich mit Referenzwerten Aussagen über die Maschine.

Derartige Schwingungsüberwachungssysteme weisen daher einen oder mehrere Eingänge für analoge Signale auf, die einer Frequenzanalyse unterworfen werden.

Aus US 4 429 578 A ist ein Überwachungssystem mit den Merkmalen gemäß dem Oberbegriff des Anspruchs 1 bekannt.

Zudem können derartige Überwachungseinheiten auch Eingänge für andere erfasste Größen aufweisen, dies ist jedoch oft nicht der Fall oder es gibt nur eine geringe Anzahl derartiger Eingänge.

Bei Aggregaten, insbesondere Schwingungen unterworfenen Aggregaten gibt es andererseits eine Vielzahl von Parametern, die außer oder zusätzlich zu den Schwingungen überwacht werden können wie beispielsweise Temperaturen oder der Zustand einer Kühlflüssigkeit beziehungsweise eines Öls.

Bei der Analyse eines Öls können beispielsweise Partikelzähleinrichtungen vorgesehen sein, die verschiedene Arten von Partikeln registrieren und deren Häufigkeit beziehungsweise Dichte in dem Öl/der Kühlflüssigkeit erfassen.

Über die Häufigkeit bestimmter Partikelarten lassen sich Aussagen über den Zustand des Öls/der Kühlflüssigkeit bzw. der geschmierten Komponenten (z.B. Zahnräder, Wälzlager) machen.

Derartige Sensoreinrichtungen mit Zähleinrichtungen für die Partikelarten/- größen stellen die entsprechenden Messwerte oft in digitaler Form beispielsweise an einer seriellen Schnittstelle dar, wobei die Übertragung über Datenpakete beziehungsweise vektorartige Datenstrukturen geschieht. Ein Datenvektor kann beispielsweise wenigstens zwei verschiedene skalare Werte, beispielsweise verschiedene Partikelkonzentrationen enthalten.

Die Verarbeitung derartiger Werte mit einer Schwingungsüberwachungseinrichtung ist häufig schwierig.

Der vorliegenden Erfindung liegt daher die Aufgabe zugrunde, solche Messwerte zu erfassen und auf möglichst einfache Art weiterzuleiten beziehungsweise weiterzuverarbeiten. Dabei sollte in Betracht gezogen werden, dass Frequenzüberwachungseinrichtungen oft keine passenden Signaleingänge für derartige Sensoreinrichtungen aufweisen.

Die Aufgabe wird gemäß der Erfindung mit den Merkmalen des Patentanspruchs 1 gelöst.

Die Erfindung geht dabei von dem Grundgedanken aus, dass die Frequenzüberwachungseinrichtung, insbesondere in Form einer Schwingungsüberwachungseinrichtung grundsätzlich sehr komplexe Signale verarbeiten kann. Der entsprechende Messwertkonverter kann dann so aufgebaut werden, dass er die ermittelten Messwerte in eine Form bringt, die einerseits durch die Frequenzüberwachungseinrichtung verarbeitet werden können und andererseits die Integration mehrerer skalarer Werte erlaubt, die jeweils einzelne Messwerte repräsentieren.

Daher werden die einzelnen Messwerte in relative Signalstärken einzelner periodischer, insbesondere sinusförmige Signale umgesetzt, die je nach dem zu übermittelnden Messwert verschiedene Frequenzen haben und die innerhalb des Messwertkonverters zu einem einzigen zeitabhängigen analogen Signal mit periodischer Struktur zusammengefasst werden.

In dieser Form können die Signale beispielsweise in einen standardmäßig zur Verfügung stehenden Eingang der Schwingungsüberwachungseinrichtung gegeben und in deren Frequenzanalyseeinrichtung wieder getrennt dargestellt und weiter verarbeitet werden. Dies geschieht durch eine Fourrier-Transformation beziehungsweise Fourrieranalyse, insbesondere eine Fast Fourrier-Transformation, die die einzelnen Frequenzbereiche voneinander trennt und diesen einzelne Intensitäten zuweisen kann. Die einzelnen Intensitäten der verschiedenen Frequenzen oder Frequenzbereiche repräsentieren dabei die zu übertragenen Messwerte.

Eine vorteilhafte Ausgestaltung der Erfindung sieht dabei vor, dass der Messwertkonverter wenigstens zwei Messwerte in verschiedene periodische insbesondere sinusförmige Signale mit verschiedenen Frequenzen umsetzt, deren Amplituden die Messwerte repräsentieren und die als Summensignal ausgegeben werden.

Vorteilhaft ist vorgesehen, dass der Ausgang des Messwertkonverters an einen Analogeingang einer Schwingungsüberwachungseinrichtung angeschlossen ist.

Es ist zur Verwirklichung der Erfindung auch vorteilhaft vorgesehen, dass die Schwingungsüberwachungseinrichtung eine Frequenzanalyseeinheit aufweist, die das Signal in verschiedene Frequenzanteile aufteilt und die Teilsignalstärken der Frequenzanteile ausgibt.

Oft weisen entsprechende Zusatzüberwachungssysteme wie beispielsweise Ölqualitätsanalyseeinheiten eine digitale Signalverarbeitung auf, die bewirkt, dass entsprechende Messwerte in digitaler Form an einem Ausgang bereitgestellt werden. Wie bereits ausgeführt, kann vorteilhaft vorgesehen sein, dass die Sensoreinrichtung eine Ölüberwachungseinrichtung ist.

Es kann weiter vorteilhaft vorgesehen sein, dass die Sensoreinrichtung Sensoren zur Ermittlung des Gehaltes einer oder mehrerer Partikelarten in dem Öl aufweist.

Die Sensoreinrichtung kann hierzu verschiedene Filter zur Zählung verschiedenartiger Partikel aufweisen oder sich auch unterschiedlicher Technologien zum Nachweis einzelner unterschiedlicher Partikelarten bedienen.

Das Schwingungsüberwachungssystem weist üblicherweise überwachte Alarmschwellen für bestimmte Schwingungsanteile auf, die bei Verwendung zur Überwachung anderer Messwerte ebenfalls zum Einsatz kommen können. Dies kann beispielsweise dazu führen, dass bei bestimmten Partikelkonzentrationen, die als Schwellwerte für unterschiedliche Partikel verschieden ausgelegt sein können, Alarme ausgelöst werden, um beispielsweise einen Betreiber vor einer Verschlechterung der Hydraulik- oder Schmierflüssigkeit bzw. dem Auftreten von Verschleiß und damit vor einem Ausfall der Maschinen zu warnen.

Im Folgenden wird die Erfindung anhand eines Ausführungsbeispiels in einer Zeichnung gezeigt und nachfolgend beschrieben.

Dabei zeigt:
- Figur 1: eine schematische Darstellung eines Überwachungssystems mit einem Messwertkonverter und
- Figur 2: schematisch die Umwandlung der Messwertdarstellung.

Ein beispielhafter Anwendungsfall der Erfindung besteht darin, dass zur Zustandsüberwachung einer rotierenden Maschine neben der Schwingungsdiagnose auch eine laufende Diagnose von Schmierölen durchgeführt wird. Entsprechende Ölüberwachungsgeräte sind in Form von Partikelzähleinrichtungen verfügbar. Die entsprechenden Messwerte solcher Einrichtungen haben die Form von Gruppen von Partikelanzahlen für beispielsweise vier oder mehr Partikelklassen, die in Form von Messwertvektoren vorliegen können. Diese werden typischerweise über digitale serielle Schnittstellen an Auswertungseinrichtungen weitergegeben.

Da entsprechende Schnittstellen an Schwingungsüberwachungseinrichtungen oft nicht zur Verfügung stehen, hat die Erfindung sich zum Ziel gesetzt, derartige digitale Schnittstellen an Schwingungsüberwachungseinrichtungen anzubinden, die zumindest freie Eingänge für analoge Signale bereitstellen, die typischerweise für die Schwingungsanalyse benutzt werden.

Schwingungsüberwachungseinrichtungen weisen teilweise auch Eingänge für einzelne zusätzliche Messwerte auf, jedoch werden diese häufig noch für andere Überwachungen zusätzlich zur Ölqualität verwendet und sind daher oft nicht frei verfügbar.

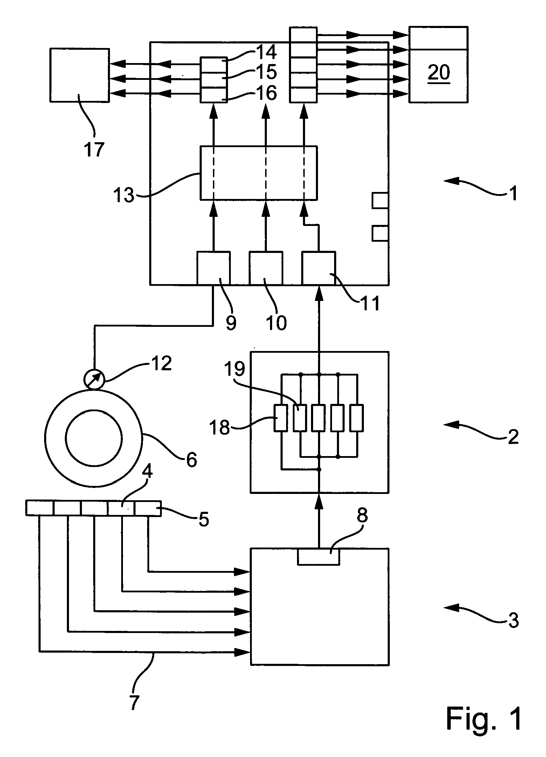

Die Figur 1 zeigt eine Schwingungsüberwachungseinrichtung 1, die mittels eines Messwertkonverters 2 an eine Sensoreinrichtung 3 angebunden ist, die Ölpartikelsensoren 4, 5 für eine Schwingungen ausgesetzte Maschine 6 aufweist.

Die Sensoreinrichtung 3 weist hierzu beispielsweise in den Sensoren optische Zähler mit entsprechenden Filtern oder elektrische Messeinrichtungen auf, die die Konzentration von verschiedenartigen Partikeln im Öl der Maschine 6 detektieren können. Die entsprechenden Messwerte werden mittels Messleitungen 7 an die Sensoreinrichtung weitergeleitet und dort an einer digitalen Schnittstelle 8 zur Verfügung gestellt.

Zur Auswertung steht eine Schwingungsüberwachungseinrichtung 1 zur Verfügung, die verschiedene analoge Signaleingänge 9, 10, 11 aufweist. Der Eingang 9 ist beispielsweise an eine Schwingungsdetektionseinrichtung 12 angeschlossen, die ein zeitabhängiges analoges Signal in Form mechanischer Schwingungen aufnimmt. Ausgehend von dem analogen Signaleingang 9 wird das Signal an eine Schwingungsanalyseeinrichtung 13 weitergeleitet, die eine so genannte Fast Fourrier-Transformation durchführt und das Signal in den Frequenzraum übersetzt, so dass Schwingungsintensitäten beispielsweise in drei Frequenzbereichen an die Module 14, 15, 16 geleitet werden. Die entsprechenden Größen bezeichnen die Intensität einzelner isolierter Schwingungsmoden in den verschiedenen Frequenzbereichen. Diese Intensitäten können an eine Alarmschwellenüberwachungseinrichtung 17 geleitet werden, die Signale abgibt sobald bestimmte Schwingungsmoden in separaten, definierten Frequenzbereichen bestimmte Intensitäten überschreiten. Dies kann nämlich bedeuten, dass bestimmte Veränderungen an der Maschine, beispielsweise durch Lagerschäden aufgetreten sind und daher eine Wartung der Maschine vorgenommen werden muss.

An der Schwingungsüberwachungseinrichtung 1 stehen analoge Eingangskanäle ähnlich dem Kanal 9 zusätzlich zur Verfügung und ein weiterer analoger Eingangskanal 11 kann zur Verarbeitung der durch die Sensoreinrichtung 3 gelieferten Signale dienen.

Hierzu ist der Messwertkonverter 2 notwendig, der das digitale Signal aus der Schnittstelle 8 aufnimmt und in ein analoges Signal umwandelt, das durch die Schwingungsüberwachungseinrichtung 1 verarbeitbar ist. Hierzu ordnet der Messwertkonverter 2 jedem einzelnen Messwert, also beispielsweise jeder einzelnen Partikelkonzentration eine Frequenz beziehungsweise einen Frequenzbereich zu und bildet beispielsweise eine Sinusschwingung der entsprechenden Frequenz mit einer Intensität aus, die dem jeweiligen Messwert entspricht. Schematisch ist das in der Figur durch die verschiedenen Oszillatoren 18, 19 dargestellt, deren Signale zusammengeführt und als analoges Summensignal an den analogen Eingang 11 der Schwingungsüberwachungseinrichtung geleitet werden.

Dort wird das Summensignal durch Frequenzanalyse wieder in die einzelnen Schwingungen aufgeteilt und diese werden bezüglich ihrer Einzelintensitäten analysiert, so dass die einzelnen Messwerte in einer Schwellwertüberwachungseinrichtung 20 überwacht werden können.

Zeigt die Schwellwertüberwachungseinrichtung 20 die Überschreitung bestimmter Partikelkonzentrationen oder Kombinationen von Konzentrationen an, die vorher als Referenzwerte festgelegt worden sind, so gibt sie ein Signal aus, das zu einer Revision beziehungsweise Wartung oder Reparatur der elektrischen Maschine oder zum Austausch des Öls auffordert.

Es ist somit mittels der Erfindung möglich, die ohnehin in der Schwingungsüberwachungseinrichtung 1 vorhandenen Signalverarbeitungseinrichtungen zu verwenden, um andersartige Messwerte, die an sich direkt nichts mit der Erfassung von Schwingungen zu tun haben, durch ein Frequenzmultiplexverfahren zu verarbeiten.

Auf diese Weise wird die Verwendung zusätzlicher andersartiger Messwerterfassungs- und Auswertungseinrichtungen eingespart.

In dem Messwertkonverter wird hierzu außer einer Anzahl von Oszillatoren, die auch digital ausgebildet sein können, lediglich ein Digital/analog-Konverter zur Ausbildung eines zeitabhängigen analogen Signals benötigt. Es können zusätzlich zu den skalaren Messwerten bezüglich der gemessenen Partikelkonzentrationen auch weitere Statusinformationen des Systems entsprechend dem oben dargestellten Verfahren in Frequenzsignale beziehungsweise Intensitäten bestimmter Frequenzbereiche umgesetzt werden, um weitere Zustandsinformationen über das System zu gewinnen und mittels der Frequenzüberwachungseinrichtung verarbeiten zu können.

Bei der Auswahl der verwendeten Frequenzen muss darauf geachtet werden, dass diese von entsprechenden Trägerfrequenzen getrennt sind und auch möglichst nicht ganzzahlige Vielfache von Trägerfrequenzen betragen und dass auch die Kopplung der benutzten Frequenzen untereinander minimiert wird.

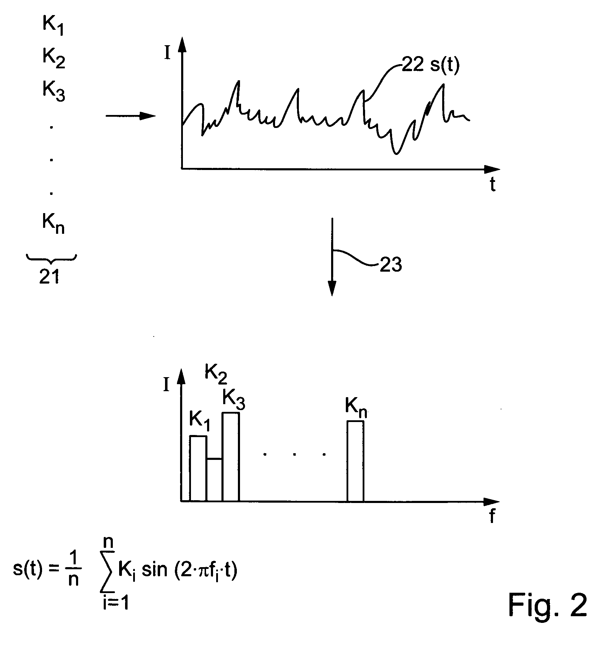

Die Figur 2 zeigt zunächst einen Satz 21 von Messwerten, die ausgewertet werden sollen und die innerhalb des Messwertkonverters 2 in ein analoges zeitabhängiges Signal 22 umgesetzt werden.

Dieses wird der Schwingungsüberwachungseinrichtung 1 zugeleitet und dort in einer Frequenzanalyseeinrichtung 13 in dem Verfahrensschritt 23 in den Frequenzraum überführt, so dass dort einzelne Intensitäten K1 bis Kn von Einzelschwingungen vorliegen, die wiederum den entsprechenden Messwerten oder Zustandsparametern entsprechen und weiter ausgewertet werden können. Das analoge Signal 22 entspricht beispielsweise in seiner Zusammensetzung der in der Figur 2 angegebenen Formel s(t).

### Bezugszeichenliste

- 1: Schwingungsüberwachungseinrichtung
- 2: Messwertkonverter
- 3: Sensoreinrichtung
- 4, 5: Ölpartikelsensoren
- 6: Maschine
- 7: Messleitungen
- 8: digitale Schnittstelle
- 9, 10, 11: analoge Signaleingänge
- 12: Schwingungsdetektionseinrichtung
- 13: Schwingungsanalyseeinrichtung
- 14, 15, 16: Module
- 17: Alarmschwellenüberwachungseinrichtung
- 18, 19: Oszillatoren
- 20: Schwellwertüberwachungseinrichtung
- 21: Satz von Messwerten
- 22: analoges zeitabhängiges Signal
- 23: Verfahrensschritt

## Patentansprüche

1. Überwachungssystem für ein schwingungsunterworfenes Aggregat (6) mit einer ersten Einrichtung (1) zur Überwachung von Frequenzen und mit wenigstens einer Sensoreinrichtung (3), die einen oder mehrere Messwerte erfasst,
**gekennzeichnet durch** einen Messwertkonverter (2) mit einem Eingang für
den einen oder die mehreren Messwerte, der diese in ein kombiniertes zeitlich veränderliches analoges Signal umsetzt und der ersten Einrichtung (1) liefert, in dem wenigstens ein Frequenzanteil einen Messwert repräsentiert, wobei die Sensoreinrichtung (3) einen digitalen Signalausgang (8) für den oder die erfassten Messwerte aufweist.

2. Überwachungssystem nach Anspruch 1,
**dadurch gekennzeichnet, dass** der Messwertkonverter (2) wenigstens zwei Messwerte in verschiedene periodische insbesondere sinusförmige Signale mit verschiedenen Frequenzen umsetzt, deren Amplituden die Messwerte repräsentieren und die als Summensignal ausgegeben werden.

3. Überwachungssystem nach Anspruch 1 oder 2,
**dadurch gekennzeichnet, dass** der Ausgang des Messwertkonverters an einen Analogeingang (11) einer Schwingungsüberwachungseinrichtung (1) angeschlossen ist.

4. Überwachungssystem nach Anspruch 3,
**dadurch gekennzeichnet, dass** die Schwingungsüberwachungseinrichtung (1) eine Frequenzanalyseeinheit (13) aufweist, die das Signal in verschiedene Frequenzanteile aufteilt und die Teilsignalstärken der Frequenzanteile ausgibt.

5. Überwachungssystem nach einem der vorhergehenden Ansprüche ,
**dadurch gekennzeichnet, dass** der digitale Signalausgang (8) durch eine serielle Schnittstelle gebildet ist.

6. Überwachungssystem nach Anspruch 1 oder einem der folgenden,
**dadurch gekennzeichnet, dass** die Sensoreinrichtung (3) eine Ölüberwachungseinrichtung ist.

7. Überwachungssystem nach Anspruch 6,
**dadurch gekennzeichnet, dass** die Sensoreinrichtung (3) Sensoren (4,5) zur Ermittlung des Gehaltes einer oder mehrerer Partikelarten in dem Öl aufweist.

8. Überwachungssystem nach Anspruch 1 oder einem der folgenden,
**dadurch gekennzeichnet, dass** die Schwingungsüberwachungseinrichtung (1) wenigstens eine Schwellwertüberwachungseinrichtung (17,20) zur Überwachung wenigstens eines Frequenzanteils aufweist.

## Claims

1. Monitoring system for an assembly (6) that is subjected to vibrations, comprising a first device (1) for monitoring frequencies and comprising at least one sensor device (3), which detects one or more measured values, **characterized by** a measured value converter (2) with an input for the one or more measured values, which converts the latter into a combined, time-variable analog signal and delivers it to the first device (1), in which at least one frequency component represents a measured value, wherein the sensor device (3) has a digital signal output (8) for the measured value(s) detected.

2. Monitoring system according to Claim 1, **characterized in that** the measured value converter (2) converts at least two measured values into different periodic, in particular sinusoidal, signals with different frequencies, the amplitudes of which represent the measured values and which are output as an aggregate signal.

3. Monitoring system according to Claim 1 or 2, **characterized in that** the output of the measured value converter is connected to an analog input (11) of a vibration monitoring device (1).

4. Monitoring system according to Claim 3, **characterized in that** the vibration monitoring device (1) has a frequency analysis unit (13), which divides the signal up into different frequency components and outputs the partial signal strengths of the frequency components.

5. Monitoring system according to one of the preceding claims, **characterized in that** the digital signal output (8) is formed by a serial interface.

6. Monitoring system according to Claim 1 or one of the following claims, **characterized in that** the sensor device (3) is an oil monitoring device.

7. Monitoring system according to Claim 6, **characterized in that** the sensor device (3) has sensors (4, 5) for determining the content of one or more types of particle in the oil.

8. Monitoring system according to Claim 1 or one of the following claims, **characterized in that** the vibration monitoring device (1) has at least one threshold monitoring device (17, 20) for monitoring at least one frequency component.

## Revendications

1. Système de surveillance pour ensemble (6) soumis à des vibrations, le système présentant un premier dispositif (1) de surveillance de fréquences et au moins un dispositif de détection (3) qui saisit une ou plusieurs valeurs de mesure,
**caractérisé par**
un convertisseur (2) de valeurs de mesure présentant une entrée pour la ou les différentes valeurs de mesure, qui les convertit en un signal analogique combiné variable dans le temps et qui délivre ce signal au premier dispositif (1), au moins une partie des fréquences représentant une valeur de mesure, le dispositif de détection (3) présentant une sortie numérique de signaux (8) prévue pour la ou les valeurs de mesure saisies.

2. Système de surveillance selon la revendication 1, **caractérisé en ce que** le convertisseur (2) de valeurs de mesure convertit au moins deux valeurs de mesure en différents signaux périodiques et en particulier sinusoïdaux présentant des fréquences différentes, dont les amplitudes représentent des valeurs de mesure et délivrées comme signal de somme.

3. Système de surveillance selon les revendications 1 ou 2, **caractérisé en ce que** la sortie du convertisseur de mesure est raccordée à une entrée analogique (11) d'un dispositif (1) de surveillance de vibrations.

4. Système de surveillance selon la revendication 3, **caractérisé en ce que** le dispositif (1) de surveillance de vibrations présente une unité (13) d'analyse de fréquences qui divise le signal en différentes plages de fréquences et délivre les intensités des signaux partiels représentant les plages de fréquences.

5. Système de surveillance selon l'une des revendications précédentes, **caractérisé en ce que** la sortie numérique de signaux (8) est formée d'une interface série.

6. Système de surveillance selon la revendication 1 ou l'une des suivantes, **caractérisé en ce que** le dispositif de détection (3) est un dispositif de surveillance d'huile.

7. Système de surveillance selon la revendication 6, **caractérisé en ce que** le dispositif de détection (3) présente les capteurs (4, 5) qui déterminent la teneur de l'huile en une ou plusieurs sortes de particules.

8. Système de surveillance selon la revendication 1 ou l'une des suivantes, **caractérisé en ce que** le dispositif (1) de surveillance des vibrations présente au moins un dispositif (17, 20) de surveillance de valeurs de seuil qui surveille au moins une partie des fréquences.
